# EUROPEAN PATENT APPLICATION

(11) **EP 4 428 700 A1**
(43) Date of publication of application: **11.09.2024**
(21) Application number: 22903611.6
(22) Date of filing: 09.12.2022
(51) Int. Cl.: G06F 13/28

(54) **SERVICE PROCESSING METHOD AND APPARATUS**

(30) Priority: 10.12.2021 CN 202111511024
(71) Applicant: Huawei Technologies Co., Ltd., Shenzhen, Guangdong 518129 (CN)
(72) Inventor: CHEN, Xiaoyu, Shenzhen, Guangdong 518129 (CN)
(74) Representative: Pfenning, Meinig & Partner mbB
(86) International application number: PCT/CN2022/138012
(87) International publication number: WO 2023/104194

(57) **Abstract**

A service processing method and apparatus are provided, and relate to the field of computer technologies. The method includes: First, a first-type processor included in a server obtains a first message for requesting a first service. Second, the first-type processor parses the first message, and writes data needed by the first service into DMA space, where the DMA space is storage space provided by a memory of the server based on a DMA technology. Finally, a second-type processor whose performance is better than that of the first-type processor in the server reads the foregoing data from the DMA space, and outputs a processing result of the first service. Because the first-type processor does not need to send an interrupt signal to the second-type processor, service interruption of the second-type processor is avoided, and a service processing delay is reduced. In addition, the DMA space can be directly accessed by hardware, for example, data access is directly performed by the first-type processor and the second-type processor, so that a processing delay caused by address translation is reduced, an overall service processing delay of the server is further reduced, and service processing performance of the server is improved.

## Description

This application claims priority to Chinese Patent Application No. 202111511024.X, filed with the China National Intellectual Property Administration on December 10, 2021 and entitled "SERVICE PROCESSING METHOD AND APPARATUS", which is incorporated herein by reference in its entirety.

### TECHNICAL FIELD

This application relates to the field of computer technologies, and in particular, to a service processing method and apparatus.

### BACKGROUND

A remote procedure call (remote procedure call, RPC) protocol is a protocol of a technology in which a source server requests a service from a destination server via a network, and the source server does not need to know an underlying network of the destination server. For example, a plurality of servers process data based on the RPC protocol, for example, perform a service such as data access or data computing. Generally, the source server initiates an RPC request to the destination server, and after receiving the RPC request, the destination server executes a service indicated by the RPC request. To obtain data needed for executing the foregoing task, the destination server generally generates an interrupt signal to interrupt a local operating system (operating system, OS) service, to determine a physical address of the foregoing data. Then, the destination server completes, based on data indicated by the physical address, the service indicated by the RPC request. After finishing executing the foregoing service, the destination server executes the local OS service again. In other words, the local OS service is interrupted due to the service indicated by the RPC request, and consequently, a service processing delay of the destination server is high. Therefore, providing a more effective service processing method becomes an urgent problem to be resolved currently.

### SUMMARY

Embodiments of this application provide a service processing method and apparatus, to resolve a problem that a service processing delay of a server is high.

The following technical solutions are used in this application.

According to a first aspect, this application provides a service processing method. The service processing method is applied to a server, or a physical device that supports implementation of the service processing method implemented by the server. For example, the physical device includes a chip system. The server includes a first-type processor and a second-type processor whose performance is better than that of the first-type processor. For example, the service processing method is performed by the foregoing server. The service processing method includes: First, the first-type processor obtains a first message for requesting a first service. Second, the first-type processor parses the first message, and writes data needed by the first service into direct memory access (direct memory access, DMA) space, where the DMA space is storage space provided by a memory of the server based on a DMA technology. Finally, the second-type processor reads the foregoing data from the DMA space, and outputs a processing result of the first service.

In this embodiment, because in a process in which the first-type processor writes the data needed by the first service into the DMA space, the first-type processor does not send an interrupt signal to the second-type processor, the second-type processor does not need to interrupt an OS service, and time of scheduling the second-type processor by the first-type processor is reduced. Therefore, a processing delay of executing the first service by the second-type processor is reduced. In addition, the data needed by the first service is written into the DMA space, and data access on the DMA space can be directly performed by hardware, for example, the first-type processor and the second-type processor. Therefore, in a processing process of the first service, the second-type processor does not need to translate a physical address of the data needed by the first service, to avoid a service processing delay caused by physical address translation. This further reduces an overall service processing delay of the server, and improves service processing performance of the server.

In an optional implementation, that the first-type processor obtains a first message for requesting a first service includes: The first-type processor reads the first message from a network adapter of the server. The first-type processor reads the received first message from the network adapter, so that a process in which the network adapter actively sends the first message is avoided, a process in which the network adapter performs receiving and sending in the server is reduced, and efficiency of receiving data from a remote end and sending data to the remote end by the network adapter is improved. This improves a data throughput of the server per unit time, and therefore improves service processing efficiency of the server.

Alternatively, the first-type processor receives the first message sent by a network adapter. The network adapter sends the first message to the first-type processor based on hardware logic, so that polling on the network adapter for a plurality of times by the first-type processor is avoided, computing resource consumption of the first-type processor is reduced, and efficiency of parsing the first message by the first-type processor in a process of processing the first service is improved. This further improves efficiency of processing the first service by the server.

In another optional implementation, the service processing method further includes: The first-type processor initializes the memory and determines the DMA space. The first-type processor determines the DMA space, so that a process of determining the DMA space by the second-type processor by consuming a computing resource can be avoided, and efficiency of executing another service by the second-type processor 222 is improved.

Alternatively, the second-type processor initializes the memory and determines the DMA space. The second-type processor determines the DMA space, so that a process of determining the DMA space by the first-type processor by consuming a computing resource in a process in which the first-type processor schedules the second-type processor to execute a service can be avoided. This further improves scheduling efficiency of the first-type processor 221.

In addition, the DMA space may alternatively be implemented by the first-type processor and the second-type processor in collaboration.

In another optional implementation, the foregoing first service includes one or more tasks. A semaphore up thread and a semaphore down thread of a task are mounted to a same processor in the second-type processor. In this way, cross-core collaboration by two processors included in the second-type processor does not need to be performed for the task. This reduces processor communication time needed when the task is executed, so that a processing delay of the task is reduced, and execution efficiency of executing, by the server, a service that includes the task is further improved.

In another optional implementation, the data needed by the first service includes service data of the first service and a function for processing the service data. That the first-type processor parses the first message, and writes data needed by the first service into DMA space includes: 1. The first-type processor determines a function identifier based on the first message, where the function identifier indicates a function list needed for executing the first service, and the function list includes one or more functions. 2. The first-type processor writes the function list and the service data into the DMA space.

In another optional implementation, the second-type processor includes one or more processors. That the first-type processor writes the function list and the service data into the DMA space includes: The first-type processor determines one or more available processors from the second-type processor, and writes the function list and the service data into a ready queue (Ready queue, ReadyQ) in the DMA space. The foregoing available processor is a processor that is in the second-type processor and that meets a scheduling requirement, one ReadyQ is associated with one available processor, and the one ReadyQ is used to store information about a to-be-processed task of the one available processor.

In a possible example, the server stores status information, and the status information indicates a thread identifier (identifier, ID) of the one or more processors and a quantity of idle user-mode threads mounted to the processor. The scheduling requirement means that the thread ID of the processor is not null, and the quantity of idle user-mode threads mounted to the processor reaches a first threshold. In this embodiment, the first-type processor may schedule, depending on whether thread IDs in the second-type processor are null, the processor included in the second-type processor, so that enabling a Poll (Poll) thread by the second-type processor to query a to-be-processed task is avoided, and idling caused by enabling the Poll thread by the second-type processor when there is no to-be-processed task of the second-type processor in the server is avoided. This reduces computing resource consumption of the second-type processor, improves efficiency of executing another service by the second-type processor, and therefore improves overall service execution performance of the server.

In another optional implementation, the service processing method further includes: The first-type processor determines a quantity of available processors in the second-type processor. If the quantity of available processors is less than or equal to a second threshold, the first-type processor enables one or more processors in the second-type processor other than the available processor. The first-type processor monitors (or listens) the quantity of available processors in the second-type processor, so that the quantity of available processors in the second-type processor reaches the second threshold, and the overall service execution performance of the server is improved.

In another optional implementation, the data needed by the first service includes service data of the first service and a function for processing the service data. That the second-type processor reads the data from the DMA space, and outputs a processing result of the first service includes: The second-type processor determines a scheduling plan of the first service according to a user-mode thread scheduling policy in the DMA space, and the second-type processor further schedules, according to the scheduling plan, the function for processing the service data, processes the service data, and outputs the processing result of the first service. The foregoing user-mode thread scheduling policy includes an execution sequence of a plurality of functions and a storage resource threshold provided by the DMA space for any processor in the second-type processor.

In this embodiment, the second-type processor may determine the execution sequence of the plurality of functions according to the user-mode thread scheduling policy, so that confusion in a process of executing the first service by the plurality of processors in the second-type processor is avoided, and performance of executing the first service by the server is improved.

According to a second aspect, this application provides a service processing apparatus. The service processing apparatus includes modules configured to perform the service processing method in any one of the first aspect or the possible designs of the first aspect.

For example, the service processing apparatus is used in a server. The server includes a first-type processor and a second-type processor, performance of the second-type processor is better than that of the first-type processor, and the service processing apparatus includes a hardware scheduling module used in the first-type processor and a service processing module used in the second-type processor.

The hardware scheduling module is configured to obtain a first message for requesting a first service.

The hardware scheduling module is further configured to: parse the first message, and write data needed by the first service into DMA space. The DMA space is storage space provided by a memory of the server based on a DMA technology.

The service processing module is configured to: read the data from the DMA space, and output a processing result of the first service.

In addition, when the service processing apparatus is configured to implement the method embodiment in any one of the first aspect, for beneficial effects, refer to descriptions of any one of the first aspect. Details are not described herein again. The service processing apparatus has a function of implementing behavior in the method example of any one of the first aspect. The function may be implemented by hardware, or may be implemented by executing corresponding software by hardware. The hardware or software includes one or more modules corresponding to the foregoing function.

According to a third aspect, this application provides a server. The server includes a memory, a first-type processor, and a second-type processor, and performance of the second-type processor is better than that of the first-type processor.

The first-type processor is configured to obtain a first message for requesting a first service.

The first-type processor is further configured to: parse the first message, and write data needed by the first service into DMA space. The DMA space is storage space provided by the memory based on a DMA technology.

The second-type processor is configured to: read the data from the DMA space, and output a processing result of the first service.

In addition, the server may be further configured to implement the method in any one of the first aspect and the possible implementations of the first aspect by using a logic circuit or executing code instructions. When the server is configured to implement the method embodiment in any one of the first aspect, for beneficial effects, refer to descriptions of any one of the first aspect. Details are not described herein again.

According to a fourth aspect, this application provides a computer-readable storage medium, including computer software instructions. When the computer software instructions are run on a computing device, the computing device is enabled to perform an operation step of the method in any one of the first aspect or the possible implementations of the first aspect.

According to a fifth aspect, this application provides a computer program product. When the computer program product runs on a computer, a computing device is enabled to perform an operation step of the method in any one of the first aspect or the possible implementations of the first aspect.

According to a sixth aspect, this application provides a chip, including a control circuit and an interface circuit. The interface circuit is configured to: receive a signal from a computing device other than a computing device and transmit the signal to a processor, or send a signal from the processor to a computing device other than the computing device. The processor is configured to implement an operation step of the method in any one of the first aspect or the possible implementations of the first aspect by using a logic circuit or executing code instructions.

According to a seventh aspect, this application provides a computing device. The computing device includes a storage and at least two different processors. The storage is configured to store a group of computer instructions. When executing the group of computer instructions, the processor performs an operation step of the service processing method in any one of the first aspect or the possible implementations of the first aspect.

Based on the implementations provided in the foregoing aspects, further combination may be performed in this application to provide more implementations.

### BRIEF DESCRIPTION OF DRAWINGS

FIG. 1 is a diagram of an application scenario of a communication system according to this application;
FIG. 2 is a schematic diagram of a structure of a server according to this application;
FIG. 3 is a schematic flowchart 1 of a service processing method according to this application;
FIG. 4 is a schematic flowchart 2 of a service processing method according to this application;
FIG. 5 is a schematic flowchart 3 of a service processing method according to this application; and
FIG. 6 is a schematic diagram of a structure of a service processing apparatus according to this application.

### DESCRIPTION OF EMBODIMENTS

This application provides a service processing method. The service processing method is performed by a server. The server includes a first-type processor and a second-type processor whose performance is better than that of the first-type processor. The service processing method includes: First, the first-type processor obtains a first message for requesting a first service. Second, the first-type processor parses the first message, and writes data needed by the first service into DMA space, where the DMA space is storage space provided by a memory of the server based on a DMA technology. Finally, the second-type processor reads the foregoing data from the DMA space, and outputs a processing result of the first service.

In this embodiment, because in a process in which the first-type processor writes the data needed by the first service into the DMA space, the first-type processor does not send an interrupt signal to the second-type processor, the second-type processor does not need to interrupt an OS service, and time of scheduling the second-type processor by the first-type processor is reduced. Therefore, a processing delay of executing the first service by the second-type processor is reduced. In addition, the data needed by the first service is written into the DMA space, and data access on the DMA space can be directly performed by hardware, for example, the first-type processor and the second-type processor. Therefore, in a processing process of the first service, the second-type processor does not need to translate a physical address of the data needed by the first service, to avoid a service processing delay caused by physical address translation. This further reduces an overall service processing delay of the server, and improves service processing performance of the server.

For clear and brief description of the following embodiments, a conventional technology is briefly described first.

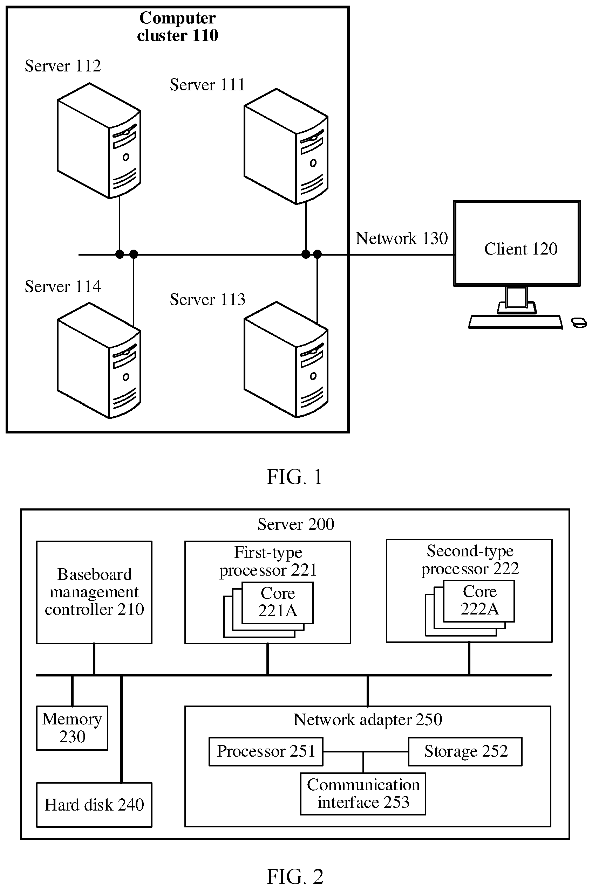

FIG. 1 is a diagram of an application scenario of a communication system according to this application. The communication system includes a computer cluster (computer cluster) 110 and a client 120. The computer cluster 110 may communicate with the client 120 via a network 130, and the network 130 may be the Internet or another network (such as the Ethernet). The network 130 may include one or more network devices. The network device may be a router, a switch, or the like.

The client 120 may be a computer running an application, and the computer running the application may be a physical machine, or may be a virtual machine.

For example, if the computer running the application is the physical machine, the physical machine may be a server or a terminal (terminal). The terminal may also be referred to as a terminal device, user equipment (user equipment, UE), a mobile station (mobile station, MS), a mobile terminal (mobile terminal, MT), or the like. The terminal may be a mobile phone, a tablet computer, a laptop, a desktop computer, a virtual reality (virtual reality, VR) terminal device, an augmented reality (augmented reality, AR) terminal device, a wireless terminal in industrial control, a wireless terminal in self driving, a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form used by the client 120 are not limited in embodiments of this application.

For another example, the computer running the application is the virtual machine, and the client 120 may be a software module running on any one or more servers in the computer cluster 110.

The computer cluster 110 is a set of computers connected via a local area network or the Internet, and is usually configured to execute a large-scale task (which may also be referred to as a job (job)). The job herein is usually a large-scale job that needs to be processed in parallel using a large quantity of computing resources. A nature and a quantity of jobs are not limited in embodiments. A job may include a plurality of computing tasks, and the tasks may be assigned to a plurality of computing resources for execution. Most tasks are executed concurrently or in parallel, while some tasks need to rely on data generated by another task. Each server in the computer cluster uses same hardware and a same operating system; or the server in the computer cluster may use different hardware and different operating systems based on a service requirement. A plurality of servers included in the computer cluster 110 perform a task in collaboration, so that it avoids a large processing delay caused because the task is executed by only one server. The task may be concurrently executed by the plurality of servers, to improve task execution efficiency.

As shown in FIG. 1, the computer cluster 110 includes the plurality of servers, for example, a server 111 to a server 114. Each server may provide the computing resource. For one server, the server may include a plurality of processors or processor cores, and each processor or processor core may be one computing resource. Therefore, one server may provide a plurality of computing resources. For example, the server may be a client (client) server or a server (server) end server.

The computer cluster 110 may process a plurality of types of jobs. In embodiments, neither a quantity of tasks nor data of tasks that can be executed in parallel is limited. For example, the foregoing job is live migration of the virtual machine, master/slave backup between the servers, or an RPC-based remote operation (such as data access, an RPC operation, and a corresponding return packet), such as data backup. The job may be generated by the client and submitted to the computer cluster for execution, for example, submitted to one or more servers in the computer cluster for execution. Specifically, a position of submitting a service is not limited in this application.

In FIG. 1, the job may be submitted from the client 120 to the computer cluster 110 via the network 130. For example, the job may be submitted to the server 111. When the job is submitted to the server 111, the server 111 may be configured to: manage all servers in the computer cluster 110, to complete one or more tasks included in the job, for example, schedule a computing resource or a storage resource of another server. For another example, the job may alternatively be submitted to another server in the computer cluster 110. A position of submitting the job is not limited in embodiments.

It should be noted that FIG. 1 is only a schematic diagram. The communication system may further include another device, which is not shown in FIG. 1. Quantities and types of servers (computing devices) and clients included in the system are not limited in embodiments of this application. For example, the computer cluster 110 may further include more or fewer computing devices. For example, the computer cluster 110 includes two computing devices. One computing device is configured to implement functions of the server 111 and the server 112, and the other computing device is configured to implement functions of the server 113 and the server 114.

For example, any server or client 120 in FIG. 1 may be implemented by using a server 200 shown in FIG. 2. FIG. 2 is a schematic diagram of a structure of the server 200 according to this application. The server 200 includes a baseboard management controller (baseboard management controller, BMC) 210, a first-type processor 221, a second-type processor 222, a memory 230, a hard disk 240, and a network adapter 250.

The baseboard management controller 210 may upgrade firmware of a device, manage a running status of the device, rectify a fault, and the like. A processor may access the baseboard management controller 210 through a bus such as a peripheral component interconnect express (Peripheral Component Interconnect express, PCIe) bus, a universal serial bus (universal serial bus, USB), or an inter-integrated circuit bus (Inter-Integrated Circuit, I2C). The baseboard management controller 210 may also be connected to at least one sensor. Status data of a computer device is obtained by using the sensor, where the status data includes: temperature data, current data, voltage data, and the like. A type of the status data is not specifically limited in this application. The baseboard management controller 210 communicates with the processor through the PCIe bus or another type of bus, for example, transfers the obtained status data to the processor for processing. The baseboard management controller 210 may also maintain program code in a storage, including upgrading, restoring, or the like. The baseboard management controller 210 may further control a power supply circuit or a clock circuit in the server 200, or the like. In short, the baseboard management controller 210 may manage the server 200 in the foregoing manners. However, the baseboard management controller 210 is only an optional device. In some implementations, the processor may directly communicate with the sensor, to directly manage and maintain the computer device.

It should be noted that, in addition to using the PCIe bus, the USB bus, and the I2C bus, a connection manner between components in the server may further use an extended industry standard architecture (extended industry standard architecture, EISA) bus, a unified bus (unified bus, Ubus or UB), a compute express link (compute express link, CXL), cache coherent interconnect for accelerators (cache coherent interconnect for accelerators, CCIX), and the like. The bus may further be classified into an address bus, a data bus, a control bus, and the like.

The processor is connected to the memory 230 through a double data rate (double data rate, DDR) bus. Herein, different memories 230 may communicate with the processor through different data buses. Therefore, the DDR bus may alternatively be replaced with another type of data bus. A type of the bus is not limited in embodiments of this application.

In addition, the server 200 further includes various input/output (input/output, I/O) devices, and the processor may access the I/O devices through the PCIe bus.

The processor (processor) is an operation core and a control core of the server 200, such as the first-type processor 221 and the second-type processor 222 shown in FIG. 2. The processor may include one or more processor cores (cores), such as a core 221A and a core 222A shown in FIG. 2.

The processor may be an ultra-large-scale integrated circuit. An operating system and another software program are installed in the processor, so that the processor can implement access to the memory 230 and various PCIe devices. It may be understood that, in embodiments of the present invention, the processor may be a central processing unit (central processing unit, CPU), or may be another application-specific integrated circuit (application-specific integrated circuit, ASIC). The processor may alternatively be a general-purpose processor, a digital signal processor (digital signal processor, DSP), a field programmable gate array (field programmable gate array, FPGA) or another programmable logic device, a discrete gate or a transistor logic device, a discrete hardware component, or the like. In actual application, the server 200 may also include a plurality of processors.

In a first possible example, the first-type processor 221 and the second-type processor 222 are classified based on performance of the processors. For example, performance of the second-type processor 222 is better than that of the first-type processor 221.

In a possible case, the performance means efficiency of executing a service by the processor. That the performance of the second-type processor 222 is better than that of the first-type processor 221 means that efficiency of executing a service by the second-type processor 222 is higher than efficiency of executing the foregoing service by the first-type processor 221. For example, the service is a fixed-point operation service, a floating-point operation service, or the like.

In another possible case, the processor may provide a computing resource, a storage resource, and a transmission resource (or referred to as a network resource). The foregoing performance includes at least one of the following: a data read/write speed of the storage resource, a quantity of times of floating-point operations and a quantity of times of fixed-point operations of the computing resource per unit time, and bandwidth of the transmission resource. The bandwidth is a maximum value of data transmitted per unit time.

In the second possible example, the first-type processor 221 and the second-type processor 222 are classified based on architecture types of the processors. For example, the first-type processor 221 is a processor of an advanced reduced instruction set computer machine (advanced reduced instruction set computer machine, ARM) architecture, and the second-type processor 222 is a processor of an X86 architecture.

It should be noted that the foregoing two examples are merely possible distinguishing manners of the first-type processor 221 and the second-type processor 222 provided in embodiments, and should not be understood as a limitation on the server 200 or this application.

In embodiments, both the first-type processor 221 and the second-type processor 222 may execute all services requested by a remote end. The remote end is another server or client that communicates with the server 220, or may be an application (application, APP) that communicates with the server 220, or the like.

In some cases, the first-type processor 221 may execute a part of services requested by the remote end, and the first-type processor 221 may further schedule the second-type processor to execute the other part of services requested by the remote end. In addition, the first-type processor 221 may alternatively schedule the second-type processor to execute all services requested by the remote end. This is not limited in this application.

Optionally, the first-type processor 221 may be referred to as a heterogeneous unit, a multi-threaded little core, or the like, and the second-type processor 222 may be referred to as a service unit, a high-performance big core, or the like.

The memory 230 is also referred to as a main memory (main memory). The memory 230 is usually configured to store various running software in the operating system, and input and output data, information exchanged with an external memory, and the like. To improve an access speed of the processor, the memory 230 needs to have an advantage of a high access speed. In a conventional computer system architecture, a dynamic random access memory (dynamic random access memory, DRAM) is usually used as the memory 230. The processor can access the memory 230 at a high speed by using a memory controller, and perform a read operation and a write operation on any storage unit in the memory 230. In addition to the DRAM, the memory 230 may be another random access memory, for example, a static random access memory (static random access memory, SRAM). A quantity of memories 230 and a type of the memory 230 are not limited in embodiments. In addition, the memory 230 may be configured to have a power protection function. The power protection function means that data stored in the storage is not lost when a system is powered off and then powered on again. The memory 230 having the power protection function is referred to as a non-volatile memory.

In embodiments, the processor may manage the memory 230. For example, the processor may set, based on a DMA technology, at least a part of storage space of the memory 230 as direct memory access space (DMA space), where the DMA space may store information such as service data or a function that is needed by the processor to execute the service.

In a first possible case, the first-type processor 221 initializes the memory 230 to obtain the foregoing DMA space. The first-type processor 221 determines the DMA space, so that a process of determining the DMA space by the second-type processor 222 by consuming a computing resource can be avoided, and efficiency of executing another service by the second-type processor 222 is improved.

In a second possible case, the second-type processor 222 initializes the memory 230 to obtain the foregoing DMA space. The second-type processor 222 determines the DMA space, so that a process of determining the DMA space by the first-type processor 221 by consuming a computing resource in a process in which the first-type processor schedules the second-type processor 222 to execute a service can be avoided. This further improves scheduling efficiency of the first-type processor 221.

The foregoing two possible cases are merely two possible examples provided in embodiments. In some other possible cases, the DMA space may alternatively be obtained by processing the memory 230 by another processor or computing device. This is not limited in this application.

In an optional implementation, the processor may virtualize a part or all of the storage space of the memory 230 to obtain a storage resource pool, so that other data needed by the server 200 in a running process can be stored. For example, the memory 230 includes a plurality of memory pages (pages), the memory page is a minimum unit of a data I/O operation of the memory 230, and the memory page is also referred to as an atomic unit of data read/write. Each memory page corresponds to a segment of storage address space of the memory 230. For example, if one memory page may be used to store 4 kilobytes (kilobytes, KB) of data, the memory page corresponds to 4 KB storage address space. In addition, one memory page may alternatively correspond to larger or smaller storage address space, for example, 2 KB or 8 KB.

In embodiments, the processor may set a part of the storage space of the memory 230 as the DMA space, and set the other part of the storage space of the memory 230 as the storage resource pool. This is not limited in this application.

An I/O device is hardware that can transmit data, and may also be understood as a device connected to an I/O interface. Common I/O devices include a network adapter, a printer, a keyboard, a mouse, and the like. For example, the I/O device may be the network adapter 250 shown in FIG. 2. All external memories may also be used as the I/O device, such as a hard disk, a floppy disk, and a compact disc. The processor may access the I/O devices through the PCIe bus. It should be noted that the PCIe bus is only an example, and may be replaced with another bus, for example, the UB bus or the CXL.

As shown in FIG. 2, the network adapter 250 includes a processor 251, a storage 252, and a communication interface 253. In some possible examples, a network adapter including a processing unit and a network interface card (network interface card, NIC) is also referred to as an intelligent network interface card (intelligent NIC, iNIC).

The processor 251 is a processor having a processing capability, for example, a data processing unit (data processing unit, DPU). The DPU has versatility and programmability of the CPU, but is more specialized, and can run efficiently on a network packet, a storage request, or an analysis request. The DPU is distinguished from the CPU by a high degree of parallelism (which requires processing a large quantity of requests). Optionally, the DPU herein may alternatively be replaced with a processing chip such as a graphics processing unit (graphics processing unit, GPU) or an embedded neural network processing unit (neural network processing unit, NPU).

The storage 252 may be an internal storage that directly exchanges data with the processor 251. The storage 252 can read and write data at any time at a high speed, and is used as a temporary data storage of the operating system or another running program. The storage 252 includes at least two types of storages. For example, the storage 252 may be a random access memory or a ROM. For example, the random access memory is the DRAM or a storage class memory (storage class memory, SCM). The DRAM is a semiconductor memory. Like most RAMs, the DRAM belongs to a volatile memory (volatile memory) device. The SCM is a composite storage technology that combines characteristics of a conventional storage apparatus and the storage. The storage class memory can provide a higher read/write speed than a hard disk, but has a slower access speed than the DRAM, and has fewer costs than the DRAM. However, the DRAM and the SCM are merely examples for description in embodiments. The storage 252 may further include another random access memory, for example, the SRAM. A read-only memory may be, for example, a PROM, an EPROM, or the like. In addition, the storage 252 may alternatively be a dual inline memory module or a dual in-line memory module (dual in-line memory module, DIMM), that is, a module consisting of the DRAM, or may be a solid-state drive (solid-state drive, SSD). In actual application, a plurality of storages 252 and different types of storages 252 may be configured in the network adapter 250. A quantity of storages 252 and a type of the storage 252 are not limited in embodiments. In addition, the storage 252 may be configured to have a power protection function. The power protection function means that data stored in the storage 252 is not lost when the system is powered off and then powered on again. The storage having the power protection function is referred to as the non-volatile memory.

In a possible case, the storage 252 stores a software program, and the processor 251 runs the software program in the storage 252 to implement data access (for example, data synchronization), a computing service, virtual machine migration management, and the like.

The communication interface 253 is a network interface card configured to implement communication between the server 200 and another device. For example, a network interface card 253 may implement one or more functions of parallel to serial data conversion, data packet assembly and disassembly, network access control, data buffering, and a network signal.

The following describes in detail a specific implementation of the service processing method provided in embodiments with reference to the accompanying drawings.

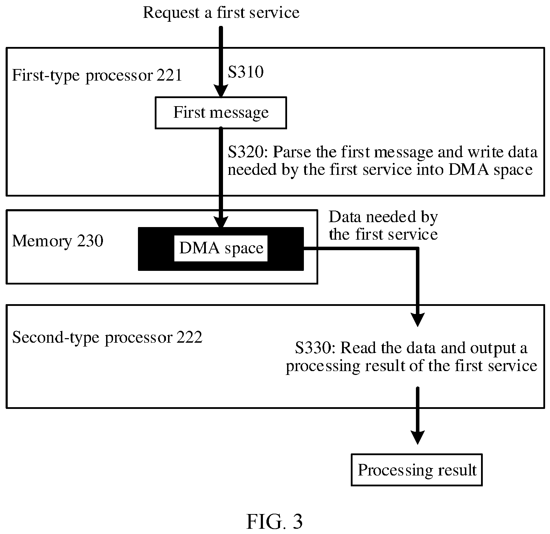

FIG. 3 is a schematic flowchart 1 of a service processing method according to this application. The service processing method may be applied to the communication system shown in FIG. 1, and the service processing method may be performed by a server, for example, any one of the server 111 to the server 114 shown in FIG. 1, or the client 120, or the server 200 shown in FIG. 2. An example in which the service processing method in this embodiment is performed by the server 200 is used for description herein.

As shown in FIG. 3, the service processing method provided in this embodiment includes the following steps.

S310: A first-type processor 221 obtains a first message for requesting a first service.

For example, the first service is a service initiated by a client application (client APP), and the client APP is a big data application, an artificial intelligence application, a cloud computing application, or the like. For example, the first service is a service indicated by an RPC request, for example, a remote direct memory operation (remote direct memory operation, RDMO). For another example, the first service is a one-sided RDMA operation based on a remote direct memory access (remote direct memory access, RDMA) technology, for example, an RDMA read operation and an RDMA write operation. Only a local end needs to specify a source address and a destination address of information, a remote end application does not need to be aware of the communication, data is read or stored by using a remote end network adapter, and the remote end network adapter encapsulates the data into a message and returns the message to the local end.

Optionally, the first service includes one or more tasks, and the task herein is a data access task, a data-based computing task, or the like.

The first message is information that carries an identifier or an instruction of the first service. For example, the first message may be received by a network adapter 250 of the server 200 from an external device. For example, the network adapter 250 usually receives and sends data in a message queue manner. A message queue includes a group of queue pairs (queue pairs, QPs), and the QP includes a send queue and a receive queue. For example, a message queue that is in the network adapter 250 and that is used to send the data is a send queue (send queue, SQ), and a message queue that is in the network adapter 250 and that is used to receive the data is a receive queue (receive queue, RQ). In addition, the network adapter 250 further maintains a completion queue (completion queue, CQ). The message queue is a connection manner used for communication between a plurality of servers. For example, a plurality of connections may be established between a plurality of servers by using a transmission control protocol/internet protocol (transmission control protocol/internet protocol, TCP/IP). Each connection has a receive queue and a send queue, and the receive queue and the send queue are used to transmit data of the connection. The message queue stores a work queue element (work queue element, WQE), and the WQE stores information pointing to an address and a length of data in the send queue or the receive queue. The length of the data may be determined by the address and an offset of the data. Information that indicates the address and the offset of the data in the WQE is also referred to as scatter/gather (scatter/gather, SG) information. If a group of data includes a plurality of segments of data, and SG information of a segment of data includes an address and an offset of the data, a plurality of pieces of SG information about the group of data in the WQE may also be referred to as an SG chain, or referred to as a scatter/gather list (scatter/gather list, SGL). For example, a WQE in the send queue is a send queue entry (send queue entry, SQE), a WQE in a receive queue is a receive queue entry (receive queue entry, RQE), and a WQE in the completion queue is a completion queue entry (completion queue entry, CQE). For more detailed descriptions of the SQ, the RQ, and the CQ, refer to related content of a conventional technology. Details are not described herein.

The following provides two feasible cases to describe a specific implementation process in which the first-type processor 221 obtains the first message.

In a first feasible case, the first-type processor 221 reads the first message from the network adapter 250 of the server 200.

For example, a Poll (Poll) thread is mounted to the first-type processor 221, and the Poll thread may read the CQE from the CQ maintained by the network adapter 250, determine an RQE associated with the CQE, and further read, from an address indicated by the RQE, the first message obtained by the network adapter 250. The first-type processor 221 reads the received first message from the network adapter 250, so that a process in which the network adapter 250 actively sends the first message is avoided, a process in which the network adapter 250 performs receiving and sending in the server 200 is reduced, and efficiency of receiving data from a remote end and sending data to the remote end by the network adapter 250 is improved. This improves a data throughput of the server 200 per unit time, and therefore improves service processing efficiency of the server.

In a second feasible case, the first-type processor 221 receives the first message sent by the network adapter 250. For example, hardware logic is disposed in the network adapter 250, and the network adapter 250 actively sends the first message to the first-type processor 221 based on the hardware logic. In this way, the network adapter 250 sends the first message to the first-type processor 221 based on the hardware logic, so that polling on the CQ for a plurality of times by the first-type processor 221 is avoided, computing resource consumption of the first-type processor 221 is reduced, and efficiency of parsing the first message by the first-type processor 221 in a process of processing the first service is improved. This further improves efficiency of processing the first service by the server 200.

The foregoing two feasible cases are merely examples provided in this embodiment, and should not be construed as a limitation on this application.

Still refer to FIG. 3. The service processing method provided in this embodiment further includes the following steps.

S320: The first-type processor 221 parses the first message and writes data needed by the first service into DMA space.

Optionally, the data needed by the first service includes service data needed by the first service and a function needed for processing the service data. The foregoing function includes at least one of an execution function and a management function. The execution function includes but is not limited to a character string operation function, a mathematical function, a process operation function, a signal processing function, an environment variable function, a character detection function, and the like. The management function includes but is not limited to a memory management function, a file permission control function, an interface processing function, and the like.

The DMA space is storage space provided by a memory 230 of the server 200 based on a DMA technology. The first-type processor 221 and the second-type processor 222 may directly access the DMA space, and do not need to perform an operation such as address translation. This reduces a delay of data access performed by a processor on the DMA space, and further improves processing efficiency of the first service.

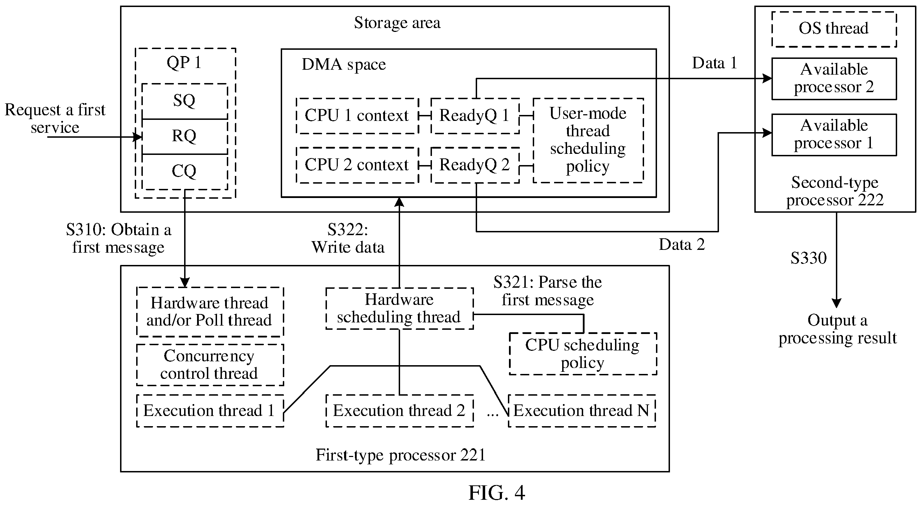

For writing, by the first-type processor 221, the data needed by the first service into the DMA space, based on FIG. 3, this embodiment provides a possible specific implementation. FIG. 4 is a schematic flowchart 2 of a service processing method according to this application. A plurality of threads are mounted to the first-type processor 221: a hardware scheduling thread, a concurrency control thread, one or more execution threads, a hardware thread, and/or a Poll thread.

The hardware scheduling thread is used to: parse the first message, and write the data needed by the first service into the DMA space. The concurrency control thread is used to divide the first service into one or more tasks. The execution thread is used to execute one or more tasks assigned by the hardware scheduling thread.

For example, the concurrency control thread divides the first service into one or more tasks, and the hardware scheduling thread distinguishes tasks included in the service. A small-granularity task is processed by the execution thread included in the first-type processor 221, and a large-granularity task is executed by the second-type processor 222. In this way, the small-granularity task is submitted to the execution thread for processing without affecting original execution efficiency of the large-granularity task. This fully utilizes high concurrency of the execution thread of the first-type processor 221, avoids affecting the execution efficiency of the large-granularity task due to poor processing performance of a single processor in the first-type processor 221, and therefore improves overall service execution performance of the server 200.

The hardware thread is used to: receive data or an instruction, such as the foregoing first message, that is in the CQ and that is sent by the network adapter 250 based on the hardware logic. The Poll (Poll) thread is used to read the foregoing first message from the CQ maintained by the network adapter 250.

In this embodiment, both the hardware thread and the Poll thread may be mounted to the first-type processor 221, and the hardware thread or the Poll thread obtains the foregoing first message. However, in some other possible cases, only one of the hardware thread and the Poll thread may be mounted to the first-type processor 221, and the thread mounted to the first-type processor 221 obtains the foregoing first message.

In addition, the first-type processor 221 further maintains a CPU scheduling policy. The CPU scheduling policy indicates an available processor in the first-type processor 221, a remaining available resource (such as a computing resource, a storage resource, and a transmission resource) of the available processor, and the like. In addition, the CPU scheduling policy further indicates information such as a processor that can be scheduled by the first-type processor 221 and a remaining available resource of the processor that can be scheduled in the second-type processor 222.

It should be noted that the CPU scheduling policy may further record information related to another processor. This is not limited in this application.

As shown in FIG. 4, a storage area includes the foregoing DMA space and a message queue (QP 1) maintained by the network adapter. The QP 1 includes the SQ, the RQ, and the CQ. The SQ is used to store data to be sent by the server 200 to the outside. The RQ is used to store remote end data or a remote end request received by the server 200. The CQ is used to record information about a completed work queue element in the SQ or the RQ.

Only one QP is shown in the storage area in FIG. 4. However, in some examples, the storage area may include a plurality of QPs, and each QP includes the SQ, the RQ, and the CQ. A plurality of RQs maintained by the network adapter 250 may be mapped to one doorbell register. The first-type processor 221 reads data from the network adapter 250 by using the doorbell register, to avoid Poll thread idling when one RQ is associated with one doorbell register and because the RQ does not store data to be read. In addition, if the network adapter 250 actively sends the data to the first-type processor 221 by using the foregoing doorbell register, consuming a computing resource of the first-type processor 221 by the Poll thread of the first-type processor 221 can be avoided. This improves service execution efficiency of the first-type processor 221, and therefore improves service processing performance of the server 220.

In hardware implementation, storage space included in the storage area may be provided by the memory 230 of the server 200.

In an optional case, the storage space included in the storage area may alternatively be provided by the memory 230 and the network adapter 250. For example, the memory 230 provides the storage space for the DMA space based on the DMA technology, and a storage 252 included in the network adapter 250 provides the storage space for the message queue.

In addition, the storage area shown in FIG. 4 may further store other data. This is not limited in this application.

Still refer to FIG. 4. The DMA space stores a ready queue (ReadyQ) of one or more processors, a CPU context, and a user-mode thread scheduling policy. The processor herein is any processor that can perform data access on the DMA space, for example, a processor included in the first-type processor 221 or a processor included in the second-type processor 222.

One ReadyQ is associated with one processor, and the ReadyQ is used to store information about a to-be-processed task of the processor associated with the ReadyQ. The information about the to-be-processed task may include but is not limited to service data, a function, and the like that are needed for executing the to-be-processed task. In some cases, the ReadyQ may also be referred to as a CPU run queue of the processor.

One CPU context is associated with one processor, and the CPU context includes at least a thread ID of the processor, such as a CPU 1 context and a CPU 2 context shown in FIG. 4. Because the CPU context contains thread IDs of all threads of the processor, the CPU context actually also records a quantity of threads of the processor. In addition, the thread ID is merely an example for describing the thread of the processor recorded in the CPU context in this embodiment. In some cases, the thread ID may alternatively be a tag (tag) or a special unique character string, and the unique character string is used to distinguish between different threads of the processor. In addition, the CPU context may further record other information about the processor associated with the CPU context. This is not limited in this application.

The user-mode thread scheduling policy includes an execution sequence of a plurality of functions. For example, the server 200 may support implementation of N functions, and the user-mode thread scheduling policy may include an execution sequence (or execution logic) of the N functions, or an execution sequence (or execution logic) of M functions (M<N) in the N functions. In this embodiment, the second-type processor may determine the execution sequence of the plurality of functions according to the user-mode thread scheduling policy, so that confusion in a process of executing the first service by the plurality of processors in the second-type processor is avoided, and performance of executing the first service by the server is improved.

The user-mode thread scheduling policy further includes a storage resource threshold provided by the DMA space for any processor in the second-type processor 222, for example, 20 megabytes (megabytes, MB), 20 KB, or the like. This avoids an increase of a processing delay of another task that is caused by scheduling a storage resource provided by the DMA space without limitation by any processor in the second-type processor 222, and reduces an overall delay of executing the first service by the server. It should be noted that the user-mode thread scheduling policy may be preset by the server 200, or may be imported to the foregoing DMA space by a user or a client through database matching. This is not limited in this application.

As shown in FIG. 4, a process in which the first-type processor 221 writes the data needed by the first service into the DMA space in S320 may include the following S321 and S322.

S321: The first-type processor 221 determines a function identifier based on the first message.

For example, the first-type processor 221 may match the first message with a function library, to determine the function identifier associated with the first service.

The function identifier indicates a function list needed for executing the first service, and the function list includes one or more functions. For example, the function list includes one execution function. For another example, the function list includes one management function and a plurality of execution functions. The function included in the function list may be stored in the function library.

In this embodiment of this application, the function library may further maintain a function needed for executing another service (for example, a second service).

In a possible case, the function library is stored in the foregoing DMA space. In another possible case, the function library is stored in storage space other than the foregoing DMA space in the storage area. In still another possible case, the function library is stored in a database that can be directly accessed by the first-type processor 221 and the second-type processor 222. A storage function of the database may be provided by a hard disk 240 included in the server 200, or may be provided by another storage device communicating with the server 200. A position of the database is not limited in this application.

The foregoing three storage cases of the function library are merely examples provided in this embodiment, and should not be construed as a limitation on this application. For example, the function library may alternatively be maintained by a distributed storage system.

Optionally, if the first message indicates that parallel (parallel) processing needs to be performed on the first service, a concurrency scheduling thread may determine, based on concurrency provided by the server for the first service, a plurality of functions needed for executing the first service, for example, one management function and a plurality of execution functions needed for concurrently executing the first service. The concurrency provided by the server for the first service is a maximum quantity of processors that are in the server and that can be used for the first service.

S322: The first-type processor 221 writes, based on the function identifier determined in S321, the function list identified by the function identifier and the service data into the DMA space.

For example, the first-type processor 221 determines one or more available processors from the second-type processor 222, and writes the function list and the service data into a ReadyQ that is in the DMA space and that is associated with the foregoing available processor.

The foregoing available processor is a processor that meets a scheduling requirement in the second-type processor 222.

Optionally, the server stores status information, and the status information indicates a thread ID of one or more processors and a quantity of idle user-mode threads mounted to the processor. For example, the status information may include the foregoing CPU context. In another possible example, the status information may further include the foregoing CPU scheduling policy.

For example, the scheduling requirement means that the thread ID of the processor is not null, and the quantity of idle user-mode threads mounted to the processor reaches a first threshold. For example, the first threshold is 1, 2, or the like. That the thread ID of the processor is not null means that the processor can be scheduled by the first-type processor 221, and that the quantity of idle user-mode threads mounted to the processor reaches the first threshold means that the processor has an idle user-mode thread that can be used to execute a task related to the first service.

In this embodiment, the first-type processor 221 may schedule, depending on whether thread IDs in the second-type processor 222 are null, the processor included in the second-type processor 222, so that enabling a Poll thread by the second-type processor 222 to query a to-be-processed task is avoided, and idling caused by enabling the Poll thread by the second-type processor 222 when there is no to-be-processed task of the second-type processor 222 in the server 200 is avoided. This reduces computing resource consumption of the second-type processor 222, improves efficiency of executing another service by the second-type processor 222, and therefore improves the overall service execution performance of the server 200.

In another optional implementation, the first-type processor 221 may further determine a quantity of available processors in the second-type processor. If the quantity of available processors is less than or equal to a second threshold (for example, five), the first-type processor 221 enables one or more processors in the second-type processor 222 other than the available processor.

For example, if the status information includes thread IDs of 10 processors in the second-type processor 222, there are three thread IDs whose statuses are not null in the 10 thread IDs, and idle user-mode threads of processors corresponding to the three thread IDs reach the first threshold, the 10 processors include three available processors. Assuming that the second threshold is five, the first-type processor 221 may enable OS service threads of other two processors included in the 10 processors, so that the other two processors can be provided for the first-type processor 221 for scheduling. This improves the overall service execution efficiency of the server 200.

Still refer to FIG. 3. The service processing method provided in this embodiment further includes the following steps.

S330: The second-type processor 222 reads the data from the DMA space and outputs a processing result of the first service.

For example, the second-type processor 222 determines a scheduling plan of the first service according to the user-mode thread scheduling policy in the DMA space, schedules, according to the scheduling plan, a function for processing the service data, processes the service data, and outputs the processing result of the first service.

As shown in FIG. 4, that the second-type processor 222 outputs the processing result may include: The second-type processor 222 writes the processing result into a send queue (SQ) included in the storage area, and the network adapter 250 sends the processing result stored in the SQ. The SQ maintained by the storage area stores the processing result of the first service, and the network adapter or another communication interface included in the server sends the processing result. This reduces a quantity of times that the processing result of the first service is sent by the server to the outside, and saves a transmission resource of the server.

In this embodiment, because in a process in which the first-type processor writes the data needed by the first service into the DMA space, the first-type processor does not send an interrupt signal to the second-type processor, the second-type processor does not need to interrupt an OS service, and time of scheduling the second-type processor by the first-type processor is reduced. Therefore, a processing delay of executing the first service by the second-type processor is reduced. In addition, the data needed by the first service is written into the DMA space, and data access on the DMA space can be directly performed by hardware, for example, the first-type processor and the second-type processor. Therefore, in a processing process of the first service, the second-type processor does not need to translate an address of the data needed by the first service, to avoid a service processing delay caused by address translation. This further reduces an overall delay of executing the first service by the server, and improves the service processing performance of the server.

Optionally, if the first service is the one-sided RDMA operation, when the server 200 serves as the remote end, to complete the one-sided RDMA operation, the second-type processor 200 needs to enable a semaphore up (sem up) thread and a semaphore down (sem down) thread that are associated with the one-sided RDMA operation. The sem up thread means superimposing semaphores (sem) of a task in the first service. If a semaphore obtained through the superposition is greater than a threshold (for example, 0), the task continues; or if a semaphore obtained through the superposition is less than or equal to the threshold (for example, 0), a process blocked on the semaphore is woken up. The sem down thread means performing subtraction on the semaphores (sem) of the task in the first service. If a semaphore obtained through the subtraction is less than the threshold (for example, 0), the task continues; or if a semaphore obtained through the subtraction is greater than the threshold (for example, 0), process execution is completed. For more information about the sem up thread, refer to related content of semaphore vrijgeven (a V operation) in the conventional technology. For more information about the sem up thread, refer to related content of semaphore passeren (a P operation) in the conventional technology. Details are not described herein.

For example, a sem up thread and a sem down thread of a task are mounted to a same processor in the second-type processor 222. In this way, cross-core collaboration by two processors included in the second-type processor 222 does not need to be performed for the task. This reduces processor communication time needed when the task is executed, so that a processing delay of the task is reduced, and execution efficiency of executing, by the server, a service that includes the task is further improved.

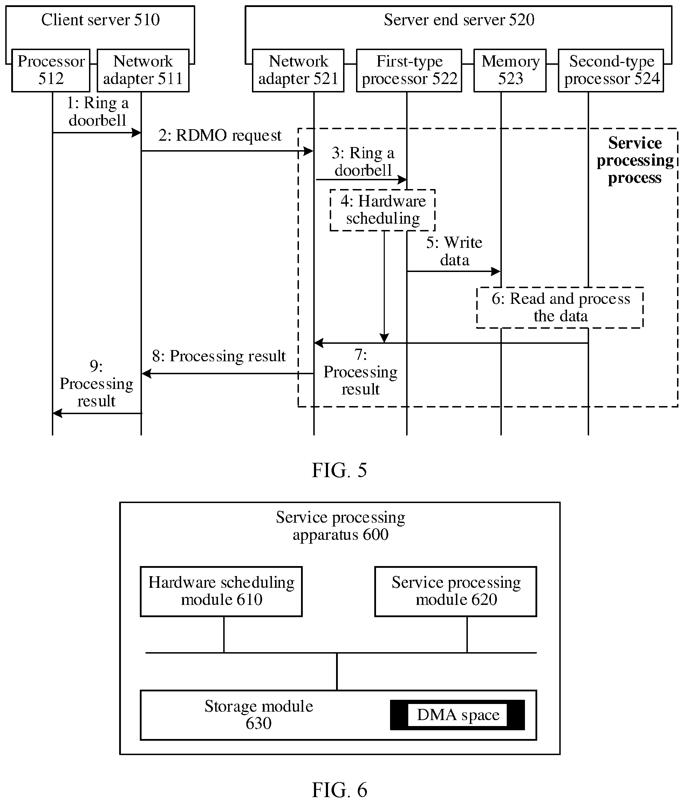

It should be noted that the foregoing embodiment of this specification is described by using an example in which a single server obtains a message for requesting a service. However, in some possible cases, the service processing method provided in this application may be further applied to more scenarios. FIG. 5 is a schematic flowchart 3 of a service processing method according to this application. A client server 510 and a server end server 520 may implement a function of any server or client in the foregoing embodiment. For hardware implementation of the client server 510 and the server end server 520, for example, a network adapter 511, a processor 512, a network adapter 521, a first-type processor 522, a memory 523, and a second-type processor 524, refer to related content of the server 200 in FIG. 2. Details are not described herein.

In a possible example, the client server 510 and the server end server 520 are located in a same computer cluster. For example, the client server 510 is the server 111 shown in FIG. 1, and the server end server 520 is the server 112 shown in FIG. 1.

In another possible example, the client server 510 is the client 120 shown in FIG. 1, and the server end server 520 is the server 112 shown in FIG. 1.

In still another possible example, the client server 510 and the server end server 520 are not associated with the computer cluster, and both the client server 510 and the server end server 520 are independent servers.

The foregoing three examples are merely descriptions of physical positions of the client server 510 and the server end server 520 in this embodiment, and should not be construed as a limitation on this application.

In some cases, the client server 510 may be referred to as a client end, and the server end server 520 may be referred to as a server end.

As shown in FIG. 5, the service processing method provided in this embodiment includes the following content 1 to 9.

Content 1: The processor 512 rings a doorbell, to enable the network adapter 511 to initiate an RDMO request.

Content 2: The network adapter 511 sends the RDMO request to the network adapter 521.

Content 3: The network adapter 521 rings a doorbell, to forward the RDMO request to the first-type processor 522.

Content 4: The first-type processor 521 parses the RDMO request, and performs hardware scheduling.

A hardware scheduling process may include but is not limited to: The first-type processor 522 transfers a task of the RDMO request to the first-type processor 522 or the second-type processor 524 for execution. For a process of parsing the RDMO request and a more specific implementation of the first-type processor 521, refer to related content of S320. Details are not described herein.

Content 5: The first-type processor 521 writes data (service data and a function list) needed by the RDMO request into DMA space provided by the memory 523.

Content 6: The second-type processor 524 reads, from the DMA space provided by the memory 523, the data needed by the RDMO request, and outputs a processing result of the RDMO request. For a process in which the second-type processor 524 reads the data from the DMA space and outputs the processing result, refer to related content of S330. Details are not described herein.

Content 7: The second-type processor 524 sends the processing result of the RDMO request to the network adapter 521.

Content 8: The network adapter 521 sends the processing result of the RDMO request to the network adapter 511.

Content 9: The network adapter 511 sends the processing result of the RDMO request to the processor 512.

It should be noted that, in FIG. 5, an example in which the server end server 520 implements the service processing method provided in this application is used for description. However, in some possible cases, after the client end (the client server 510) receives a return packet from the server end (the server end server 520), the service processing method provided in this application may also be implemented. The foregoing return packet is acknowledgment (acknowledgment, ACK) information of executing the RDMO request by the server end.

In conclusion, according to the service processing method provided in this application, the memory of the server provides the DMA space based on a DMA technology. The DMA space may be directly accessed by different hardware (for example, the first-type processor and the second-type processor). Then, the second-type processor is triggered to read the data of a service and output the processing result. Because in a process in which the first-type processor writes data needed by a first service into the DMA space, the first-type processor does not send an interrupt signal to the second-type processor, the second-type processor does not need to interrupt an OS service, and time of scheduling the second-type processor by the first-type processor is reduced. Therefore, a processing delay of executing the first service by the second-type processor is reduced.

In addition, in a processing process of the first service, the second-type processor does not need to translate an address of the data needed by the first service, to avoid a service processing delay caused by address translation. This further reduces an overall delay of executing the first service by the server, and improves service processing performance of the server.

In addition, the first-type processor may further split the service into a plurality of tasks, and schedule a plurality of processors included in the first-type processor and the second-type processor to execute the plurality of tasks, to obtain the processing result of the service. This reduces a service processing delay of the processor.

In addition, in a process in which the second-type processor outputs the processing result, a plurality of available processors may fill an SQ with data obtained by the plurality of available processors, so that the server sends the data to another device together. This reduces resource consumption of the server for data communication.

Finally, in a service execution process, the second-type processor may directly obtain the data of the service from the DMA space, and then a user-mode thread mounted to the processor executes a corresponding task. This avoids switching between a kernel mode and a user mode in the processor, reduces a processing delay of executing a task by the processor, and improves processing efficiency of executing the service by the server.

It may be understood that, to implement functions in the foregoing embodiments, the server includes corresponding hardware structures and/or software modules for performing the functions. A person skilled in the art should easily be aware that units and method steps in the examples described with reference to embodiments disclosed in this application can be implemented in a form of hardware or a combination of hardware and computer software in this application. Whether a function is executed in a manner of hardware or hardware driven by computer software depends on specific application scenarios and design constraint conditions of the technical solutions.

FIG. 6 is a schematic diagram of a structure of a service processing apparatus according to this application. The service processing apparatus may be configured to implement functions of the server in the foregoing method embodiments, and therefore can also achieve beneficial effects of the foregoing method embodiments. In this embodiment of this application, the service processing apparatus may be any server shown in FIG. 1, or may be the client 120 shown in FIG. 1, the server 200 shown in FIG. 2, or the client server 510 or the server end server 520 shown in FIG. 5, or may be a module (for example, a chip) used in a server.

As shown in FIG. 6, a service processing apparatus 600 includes a hardware scheduling module 610, a service processing module 620, and a storage module 630. The service processing apparatus 600 is configured to implement the functions of the server in the foregoing method embodiments. In a possible example, the hardware scheduling module 610 is used in the foregoing first-type processor, and the service processing module 620 is used in the second-type processor. A specific process in which the service processing apparatus 600 is configured to implement the foregoing service processing method includes the following content 1 to 3.

Content 1: The hardware scheduling module 610 is configured to obtain a first message for requesting a first service.

Content 2: The hardware scheduling module is further configured to: parse the first message, and write data needed by the first service into DMA space. The DMA space is storage space provided by a memory of the server based on a DMA technology. As shown in FIG. 6, the DMA space may be managed by the storage module 630.

Content 3: The service processing module 630 is configured to read the data from the DMA space, and output a processing result of the first service.

In addition, when the service processing apparatus is configured to implement the foregoing method embodiments, for beneficial effects, refer to related descriptions in the foregoing embodiments. Details are not described herein again.

In addition, the storage module 630 shown in FIG. 6 may be further configured to store the foregoing user-mode thread scheduling policy, the status information, and the like. For more detailed content about the user-mode thread scheduling policy and the status information, refer to related descriptions in the foregoing method embodiments. Details are not described herein.

When the service processing apparatus 600 is configured to implement the method embodiment shown in FIG. 3, the hardware scheduling module 610 is configured to perform S310 and S320, and the service processing module 620 is configured to perform S330.

When the service processing apparatus 600 is configured to implement the method embodiment shown in FIG. 4, the hardware scheduling module 610 is configured to perform S310, S321, and S322, and the service processing module 620 is configured to perform S330.

When the service processing apparatus 600 is configured to implement the method embodiment shown in FIG. 5, the hardware scheduling module 610, the service processing module 620, and the storage module 630 are configured to implement the content 2 to 8 in collaboration.

Alternatively, when the service processing apparatus 600 is configured to implement a function of the foregoing client server 510, the hardware scheduling module 610, the service processing module 620, and the storage module 630 are configured to implement the content 1, the content 2, the content 8, and the content 9 in collaboration.

It should be understood that the service processing apparatus 600 in this embodiment of this application of the present invention may be implemented by using a CPU, an ASIC, or a programmable logic device (programmable logic device, PLD). The PLD may be a complex programmable logic device (complex programmable logic device, CPLD), an FPGA, a generic array logic (generic array logic, GAL), or any combination thereof. When the service processing apparatus 600 implements, by using software, the service processing method shown in any one of FIG. 3 to FIG. 5, the service processing apparatus 600 and the modules of the service processing apparatus 600 may alternatively be software modules.

For more detailed descriptions of the service processing apparatus 600, refer directly to related descriptions in embodiments shown in FIG. 3 to FIG. 5, and details are not described herein.

For example, when the service processing apparatus 600 is implemented by using hardware, the hardware may be a computing device, such as the foregoing server, or a processor or chip used in the server. For example, the computing device includes an interface circuit and a control circuit.

The interface circuit is configured to: receive a signal from a device other than the computing device and transmit the signal to the control circuit, or send a signal from the control circuit to a device other than the computing device.

The control circuit is configured to implement the method in any possible implementation in the foregoing embodiments by using a logic circuit or executing code instructions. For beneficial effects, refer to descriptions of any aspect in the foregoing embodiments. Details are not described herein again.

It should be understood that the server according to this embodiment of this application may be corresponding to the service processing apparatus 600 in this embodiment of this application, and may be corresponding to the entities in FIG. 3 to FIG. 5 for executing the methods according to embodiments of this application. In addition, the foregoing and other operations and/or functions of the modules in the service processing apparatus 600 are separately used to implement corresponding procedures of the methods in FIG. 3 to FIG. 5. For brevity, details are not described herein again.

It may be understood that the processor in embodiments of this application may be a CPU, an NPU, or a GPU, or may be another general-purpose processor, a DSP, an ASIC, an FPGA, or another programmable logic device, a transistor logic device, a hardware component, or any combination thereof. The general-purpose processor may be a microprocessor, or may be any conventional processor.

The method steps in embodiments of this application may be implemented in a manner of hardware, or may be implemented in a manner of a processor executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. An example storage medium is coupled to the processor, so that the processor can read information from the storage medium and can write information to the storage medium. It is clear that the storage medium may alternatively be a component of the processor. The processor and the storage medium may be located in an ASIC. In addition, the ASIC may be located in a network device or a terminal device. It is clear that the processor and the storage medium may alternatively exist in the network device or the terminal device as discrete components.

All or some of the foregoing embodiments may be implemented through software, hardware, firmware, or any combination thereof. When software is used for implementation, all or some of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or transmitted from one computer-readable storage medium to another computer-readable storage medium. For example, the computer programs or instructions may be transmitted from one website site, computer, server, or data center to another website site, computer, server, or data center in a wired or wireless manner. The computer-readable storage medium may be any usable medium that can be accessed by the computer, or a data storage device such as a server or a data center that integrates one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

In embodiments of this application, unless otherwise specified or there is a logic conflict, terms and/or descriptions in different embodiments are consistent and may be mutually referenced, and technical features in different embodiments may be combined to form a new embodiment based on internal logical relationships of different embodiments. Various numbers in embodiments of this application are merely used for differentiation for ease of description, and are not used to limit the scope of embodiments of this application. The sequence numbers of the foregoing processes do not mean execution sequences, and the execution sequences of the processes should be determined based on the functions and internal logic of the processes.

## Claims

1. A service processing method, wherein the method is performed by a server, the server comprises a first-type processor and a second-type processor, performance of the second-type processor is better than that of the first-type processor, and the method comprises:
obtaining, by the first-type processor, a first message for requesting a first service;
parsing, by the first-type processor, the first message, and writing data needed by the first service into direct memory access DMA space, wherein the DMA space is storage space provided by a memory of the server based on a DMA technology; and
reading, by the second-type processor, the data from the DMA space, and outputting a processing result of the first service.

2. The method according to claim 1, wherein
the obtaining, by the first-type processor, a first message for requesting a first service comprises:
reading, by the first-type processor, the first message from a network adapter of the server; or
receiving, by the first-type processor, the first message sent by a network adapter.

3. The method according to claim 1 or 2, wherein the method further comprises:
initializing, by the first-type processor, the memory, and determining the DMA space; or
initializing, by the second-type processor, the memory, and determining the DMA space.

4. The method according to any one of claims 1 to 3, wherein
the first service comprises one or more tasks; and
a semaphore up thread and a semaphore down thread of a task are mounted to a same processor in the second-type processor.

5. The method according to any one of claims 1 to 4, wherein the data needed by the first service comprises service data of the first service and a function for processing the service data, wherein
the parsing, by the first-type processor, the first message, and writing data needed by the first service into DMA space comprises:
determining, by the first-type processor, a function identifier based on the first message, wherein the function identifier indicates a function list needed for executing the first service, and the function list comprises one or more functions; and
writing, by the first-type processor, the function list and the service data into the DMA space.

6. The method according to claim 5, wherein the second-type processor comprises one or more processors, wherein
the writing, by the first-type processor, the function list and the service data into the DMA space comprises:
determining, by the first-type processor, one or more available processors from the second-type processor, wherein the available processor is a processor that is in the second-type processor and that meets a scheduling requirement; and
writing, by the first-type processor, the function list and the service data into a ready queue ReadyQ in the DMA space, wherein one ReadyQ is associated with one available processor, and the one ReadyQ is used to store information about a to-be-processed task of the one available processor.

7. The method according to claim 6, wherein the server stores status information, and the status information indicates a thread identifier ID of the one or more processors and a quantity of idle user-mode threads mounted to the processor; and
the scheduling requirement means that the thread ID of the processor is not null, and the quantity of idle user-mode threads mounted to the processor reaches a first threshold.

8. The method according to any one of claims 1 to 7, wherein the method further comprises:
determining, by the first-type processor, a quantity of available processors in the second-type processor; and
if the quantity of available processors is less than or equal to a second threshold, enabling, by the first-type processor, one or more processors in the second-type processor other than the available processor.

9. The method according to claim 1, wherein the data needed by the first service comprises service data of the first service and a function for processing the service data, wherein
the reading, by the second-type processor, the data from the DMA space, and outputting a processing result of the first service comprises:
determining, by the second-type processor, a scheduling plan of the first service according to a user-mode thread scheduling policy in the DMA space, wherein the user-mode thread scheduling policy comprises an execution sequence of a plurality of functions and a storage resource threshold provided by the DMA space for any processor in second-type processor; and
scheduling, by the second-type processor according to the scheduling plan, the function for processing the service data, processing the service data, and outputting the processing result of the first service.

10. A service processing apparatus, wherein the apparatus is used in a server, the server comprises a first-type processor and a second-type processor, performance of the second-type processor is better than that of the first-type processor, and the apparatus comprises a hardware scheduling module used in the first-type processor, and a service processing module used in the second-type processor, wherein
the hardware scheduling module is configured to obtain a first message for requesting a first service;
the hardware scheduling module is further configured to: parse the first message, and write data needed by the first service into direct memory access DMA space, wherein the DMA space is storage space provided by a memory of the server based on a DMA technology; and
the service processing module is configured to: read the data from the DMA space, and output a processing result of the first service.

11. The apparatus according to claim 10, wherein
the hardware scheduling module is specifically configured to read the first message from a network adapter of the server; or
the hardware scheduling module is specifically configured to receive the first message sent by a network adapter.

12. The apparatus according to claim 10 or 11, wherein
the hardware scheduling module is further configured to initialize the memory, and determine the DMA space; or
the service processing module is further configured to initialize the memory, and determine the DMA space.

13. The apparatus according to any one of claims 10 to 12, wherein
the first service comprises one or more tasks; and
a semaphore up thread and a semaphore down thread of a task are mounted to a same processor in the second-type processor.

14. The apparatus according to any one of claims 10 to 13, wherein the data needed by the first service comprises service data of the first service and a function for processing the service data, wherein
the hardware scheduling module is specifically configured to determine a function identifier based on the first message, wherein the function identifier indicates a function list needed for executing the first service, and the function list comprises one or more functions; and
the hardware scheduling module is further specifically configured to write the function list and the service data into the DMA space.

15. The apparatus according to claim 14, wherein the second-type processor comprises one or more processors, wherein
the hardware scheduling module is specifically configured to determine one or more available processors from the second-type processor, wherein the available processor is a processor that is in the second-type processor and that meets a scheduling requirement; and
the hardware scheduling module is further specifically configured to write the function list and the service data into a ready queue ReadyQ in the DMA space, wherein one ReadyQ is associated with one available processor, and the one ReadyQ is used to store information about a to-be-processed task of the one available processor.

16. The apparatus according to claim 15, wherein the server stores status information, and the status information indicates a thread identifier ID of the one or more processors and a quantity of idle user-mode threads mounted to the processor; and
the scheduling requirement means that the thread ID of the processor is not null, and the quantity of idle user-mode threads mounted to the processor reaches a first threshold.

17. The apparatus according to any one of claims 10 to 16, wherein
the hardware scheduling module is further configured to: determine a quantity of available processors in the second-type processor; and if the quantity of available processors is less than or equal to a second threshold, enable one or more processors in the second-type processor other than the available processor.

18. The apparatus according to claims 10 to 17, wherein the data needed by the first service comprises the service data of the first service and the function for processing the service data, wherein
the service processing module is specifically configured to determine a scheduling plan of the first service according to a user-mode thread scheduling policy in the DMA space, wherein the user-mode thread scheduling policy comprises an execution sequence of a plurality of functions and a storage resource threshold provided by the DMA space for any processor in the second-type processor; and
the service processing module is further specifically configured to: schedule, according to the scheduling plan, the function for processing the service data, process the service data, and output the processing result of the first service.

19. A server, wherein the server comprises a memory, a first-type processor, and a second-type processor, and performance of the second-type processor is better than that of the first-type processor, wherein
the first-type processor is configured to obtain a first message for requesting a first service;
the first-type processor is further configured to: parse the first message, and write data needed by the first service into direct memory access DMA space, wherein the DMA space is storage space provided by the memory based on a DMA technology; and
the second-type processor is configured to: read the data from the DMA space, and output a processing result of the first service.

20. A computer-readable storage medium, wherein the storage medium stores a computer program or instructions, and when the computer program or instructions is/are executed by a server, the method according to any one of claims 1 to 9 is implemented.
